# EUROPÄISCHE PATENTSCHRIFT

(11) **EP 2 511 127 B1**
(45) Veröffentlichungstag und Bekanntmachung des Hinweises auf die Patenterteilung: **07.07.2021**
(21) Anmeldenummer: 12001820.5
(22) Anmeldetag: 15.03.2012
(51) Int. Cl.: B60N 2/809

(54) **Kopfstütze für Fahrzeugsitze**
Head support for vehicle seats
Appui-tête pour sièges de véhicules

(30) Priorität: 14.04.2011 DE 102011017067; 03.05.2011 DE 102011100341
(43) Veröffentlichungstag der Anmeldung: 17.10.2012
(73) Patentinhaber: GRAMMER AG, 92289 Ursensollen (DE)
(72) Erfinder: Ahlbrand, Marc, 40489 Düsseldorf (DE); Willms, Alexander, 51149 Köln (DE); Röttsches, Harald, 52249 Eschweiler (DE)
(74) Vertreter: Roche, von Westernhagen & Ehresmann

(56) Entgegenhaltungen:
- DE-B3-102005 007 509
- DE-U1- 29 916 167
- US-A- 5 257 853
- US-B1- 6 183 045

## Beschreibung

Eine Kopfstütze wie im Folgenden beschrieben ist bekannt aus offenkundiger Vorbenutzung. An einem Basiselement der Kopfstütze sind Tragstangen befestigt. Das Basiselement wird mit einer Schaumschicht versehen. Die Schaumschicht kann z.B. durch separate Fertigung eines Formschaumteils erfolgen, welches anschließend an dem Basiselement montiert wird. Alternativ wird z.B. die Montageeinheit aus Tragstangen und Basiselement in einer bestimmten Position zu einer Form gehaltert. In die Form wird ein Bezug z.B. aus einem textilen Material, aus Leder oder aus Kunstleder eingelegt, welcher später die Oberfläche des Kopfanlageteils bildet. Anschließend wird Schaum in den Bezug eingespritzt, so dass sich der Bezug an die Wand der Form anlegt und das Basiselement mit Schaum umspritzt ist. Unterschiedliche Kopfstützenformen lassen sich auf diese Weise je nach Gestaltung der Form herstellen.

In der DE 10 2005 007 509 B3 ist eine Kopfstütze beschrieben, bei welcher ein Polster an einem Trägerkörper befestigt ist. Der auf diese Weise hergestellte Polsterkörper wird mit einem Basiselement, an welchem die Tragstangen befestigt werden, schwenkbar verbunden. Dabei ist der Trägerkörper derart modular erweiterbar, dass sich die Möglichkeiten der Erweiterbarkeit auf die Verstelleigenschaften, d.h., auf die Höhenverstellung, die Tiefenverstellung und die Neigungsverstellung der Kopfstütze beziehen.

Die DE 299 16 167 U1 umfasst eine Kopfstütze mit einem Kopfpolsterträgerteil, welches mit einem Basiselement verbunden ist. Zwischen dem Basiselement und dem Kopfpolsterträgerteil ist ein Gassack angeordnet, welcher aufgeblasen werden kann, um das Kopfpolsterträgerteil in Richtung des Kopfes eines Sitzinsassen zu bewegen.

Die US 5,257,853 A betrifft eine Kopfstütze mit einem Basisteil, welches zwei Hälften umfasst, die mit einem Filmscharnier miteinander verbunden sind. Nach dem Einlegen eines Tragstangenbügels können die Hälften aufeinandergeklappt werden, so dass Zapfen der einen Hälfte Öffnungen in der anderen Hälfte durchgreifen. Durch Aufschmelzen der Zapfen bilden diese eine Nietverbindung, welche das Auseinanderklappen der Hälften verhindert. Schließlich wird ein Schaumbelag um das Basisteil geformt. Die US 6,183,045 B1 betrifft eine Kopfstütze mit einem Basisteil und einem Tragstangenbügel; zur Herstellung kann der Tragstangenbügel in eine Form eingelegt und dann umspritzt werden. Alternativ kann das Basisteil aus zwei durch ein Scharnier miteinander verbundenen Hälften hergestellt sein, in welches der Tragstangenbügel eingelegt wird. Die Hälften werden daraufhin aufeinandergeklappt und dann aneinander befestigt.

Es ist Aufgabe der Erfindung, eine Kopfstütze zu schaffen, die ein geringes Gewicht aufweist und die flexibel in unterschiedlichen Formen herstellbar ist.

Die Aufgabe wird gemäß einem ersten Aspekt der Erfindung, der zwei Alternativen einschließt, durch eine Kopfstütze mit den Merkmalen des Anspruchs 1 gelöst.

Die Kopfstütze umfasst ein Basiselement, welches auf Tragstangen an einem Fahrzeugsitz gelagert ist. An dem Basiskörper ist ein Hohlkörper gehalten. Der Hohlkörper ist von einem schalenförmigen Formteil gebildet. Z.B. ist der Hohlkörper von einem Kunststoffspritzgießteil gebildet. Alternativ kann der Hohlkörper z.B. als Blechteil ausgebildet sein. Wenigstens eine Anlagefläche des Hohlkörpers ist komplementär zu einer Außenfläche des Basiselements ausgebildet.

Der Hohlkörper ist beispielsweise mit einer Öffnung versehen. Die Öffnung weist zu dem Basiselement, wenn der Hohlkörper an dem Basiselement montiert ist. Ein Hohlraum des Hohlkörpers ist dann zwischen einer von der Wand des Hohlkörpers ausgebildeten Laibung der Öffnung und einer Außenfläche des Basiselements gebildet. Die Laibung ist wenigstens teilweise komplementär zu der Außenfläche ausgebildet und liegt dicht an der Außenfläche an.

Gemäß einer alternativen Ausführungsform kann der Hohlkörper auch im Wesentlichen geschlossen ausgebildet sein. In diesem Fall ist der Hohlraum des Hohlkörpers im Wesentlichen von der Wand des Hohlkörpers gebildet. Der Hohlraum kann mit einem Gas, wie z.B. Luft oder z.B. mit einem leichten Füllmaterial ausgefüllt sein. Auf dem Hohlkörper und dem Basiselement kann anschließend z.B. ein Formschaumteil montiert werden. Alternativ wird z.B. ein Bezug in die Form eingelegt, und anschließend wird Schaum in den Bezug eingespritzt, so dass sich der Bezug an die Wand der Form anlegt und das in definierter Position zu der Form gehalterte Basiselement mit Schaum umspritzt ist. Der Hohlkörper weist auch bei diesem Ausführungsbeispiel wenigstens eine Anlagefläche auf, die komplementär zu einer Außenfläche des Basiselements ausgebildet ist.

Mit Hilfe des Hohlkörpers ist es möglich, das Gewicht der Kopfstütze zu reduzieren, da in dem Hohlraum kein gewichtsintensiver Polsterschaum vorhanden ist. Hohlkörper unterschiedlicher Form können an dem Basiselement befestigt werden. Auf diese Weise ist es möglich, die Form der Kopfstütze flexibel zu verändern, ohne das Basiselement ändern zu müssen. Darüber hinaus kann z.B. der Widerstand gegen ein Eindrücken des Kopfpolsters der Kopfstütze durch den Hohlkörper beeinflusst werden. Dies ist insbesondere wichtig für Kopfstützen von Fahrzeugen, die in den USA betrieben werden. Denn hier erfolgt ein Prüfverfahren, bei dem eine Prüfkugel sich unter einer bestimmten Belastung lediglich bis zu einem zulässigen Grad in das Polster eindrücken darf.

Der Hohlkörper ist schalenförmig ausgebildet, wobei in einem einfachen Prozess Hohlkörper beliebiger Form produziert werden können, die ein geringes Gewicht aufweisen und einen Hohlraum ausbilden. Die Herstellung kann z.B. auf einfache Weise durch Tiefziehen erfolgen. Darüber hinaus ist es leicht möglich, die Öffnung umgebende Laibung wenigstens teilweise komplementär zu der Außenfläche des Basiselements auszubilden.

Eine Anlagefläche des Hohlkörpers ist wenigstens teilweise komplementär ausgebildet zu einer Außenfläche des Basiselements. Wenn der Hohlkörper an einer zu dem Basiselement weisenden Seite eine Öffnung aufweist, ist die die Öffnung umgebende Laibung wenigstens teilweise komplementär zu der Form einer Außenfläche des Basiselements. Auch bei einer geschlossenen Ausbildung des Hohlkörpers ist die Anlagefläche des Hohlkörpers wenigstens teilweise komplementär zu der Außenfläche des Basiselements. Die Anlagefläche liegt in beiden vorgenannten Ausführungsbeispielen z.B. bündig an der Außenfläche des Basiselements an. Es ist dann leicht möglich, das Basiselement und den Hohlkörper mit Schaum, z.B. Polyurethanschaum, zu umspritzen, ohne dass der Schaum in den Hohlraum des Hohlkörpers gelangt.

Eine andere Ausführungsform ist dadurch gekennzeichnet, dass zwischen der Außenfläche des Basiselements und dem Rand des Hohlkörpers ein Dichtmittel eingefügt ist. Mit dieser Ausführungsform wird zusätzlich verhindert, dass Schaum beim Umspritzen des Hohlkörpers zwischen dem Rand und der Außenfläche in den Hohlraum eintreten kann.

Der Hohlkörper weist erste Befestigungsmittel auf, die mit ersten Gegenbefestigungsmitteln des Basiselements korrespondieren. Alle Befestigungsmittel einer Gruppe von Hohlkörpern korrespondieren mit den Gegenbefestigungsmitteln eines Basiselements.

Eine weitere Ausgestaltung der Erfindung zeichnet sich dadurch aus, dass das Basiselement zweite Befestigungsmittel aufweist, an denen wenigstens zweite Gegenbefestigungsmittel eines Bügels lösbar befestigbar sind. Auf diese Weise kann die Form der Kopfstütze mit einfachen Mitteln verändert werden. An dem Basiselement samt Bügel kann z.B. anschließend ein vorgefertigtes Formschaumteil montiert werden. Alternativ kann z.B. das Basiselement mit Bügel in einer definierten Position zu einer Form befestigt und mit Schaum umspritzt werden, wie oben beschrieben. Bügel unterschiedlicher Form und Maße können mit dem Basiselement verbunden werden.

Weitere Vorteile der Erfindung ergeben sich anhand eines in den Fig. dargestellten Ausführungsbeispiels. Es zeigen:
Fig. 1 eine schematische perspektivische Ansicht der erfindungsgemäßen Kopfstütze,
Fig. 2 eine schematische perspektivische Unteransicht eines Basiselements der Kopfstütze gemäß Fig. 1,
Fig. 3 eine schematische Explosionsdarstellung der Kopfstütze gemäß Fig. 1,
Fig. 4 eine schematische perspektivische Ansicht der Kopfstütze gemäß Fig. 1 in teilweiser Explosionsdarstellung,
Fig. 5 eine schematische rückwärtige Ansicht der Kopfstütze gemäß Fig. 1,
Fig. 6 eine schematische Schnittdarstellung der Kopfstütze gemäß Schnittlinie VI-VI in Fig. 5,
Fig. 7 eine schematische perspektivische Ansicht einer anderen Ausführungsform der Kopfstütze
Fig. 8 eine schematische perspektivische Ansicht der Kopfstütze gemäß Fig. 7, wobei das Kopfpolster nicht dargestellt ist,
Fig. 9 in Anlehnung an Fig. 8 das Basiselement mit einem anderen Tragstangenbügel, und
Fig. 10 eine schematische perspektivische Ansicht einer dritten Ausführungsform der Kopfstütze.

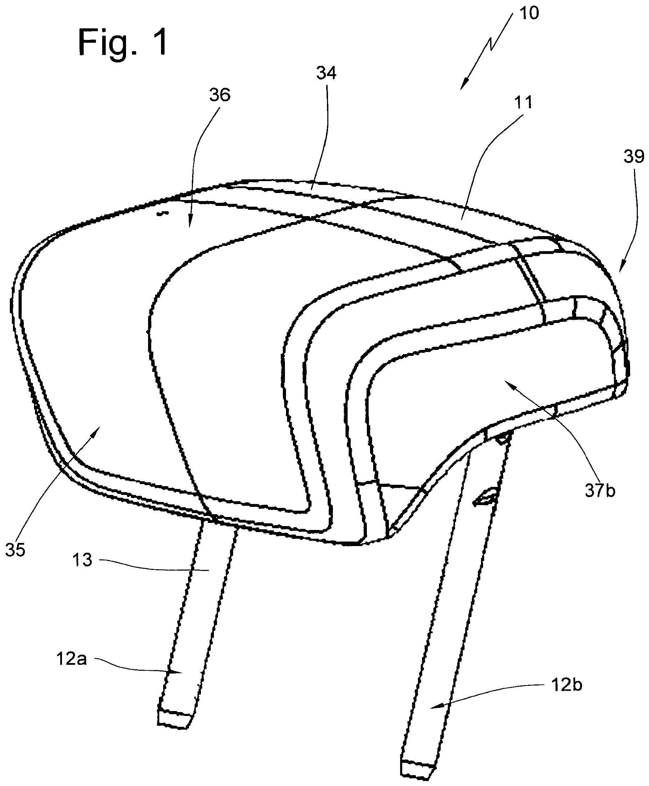

Die erfindungsgemäße Kopfstütze insgesamt ist in Fig. 1 mit dem Bezugszeichen 10 bezeichnet. Gleiche Bezugszeichen in den unterschiedlichen Fig. bezeichnen, auch wenn kleine Buchstaben hinzugefügt oder weggelassen sind, entsprechende Teile.

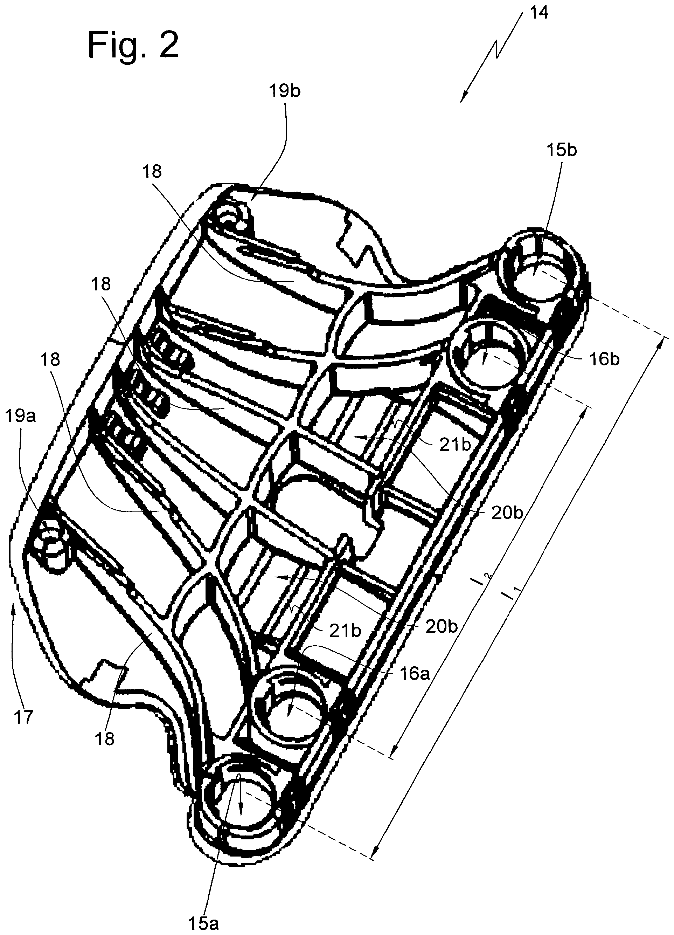

Die Kopfstütze 10 umfasst einen Polsterkörper 11, welcher auf Tragstangen 12a und 12b gelagert ist. Die Tragstangen 12a und 12b sind im vorliegenden Ausführungsbeispiel durch einen Steg 41 verbunden und bilden einen Tragstangenbügel 13. Der Polsterkörper 11 umfasst ein Basiselement 14, das in Fig. 2 dargestellt ist. Erste Lagerbuchsen 15a und 15b sind an dem Basiselement 14 angeformt. Die Lagerbuchsen 15a und 15b zur Montage des Tragstangenbügels 13 weisen einen Abstand l1 voneinander auf. Darüber hinaus sind zweite Lagerbuchsen 16a und 16b an dem Basiselement 14 angeformt, die der Montage eines zweiten Tragstangenbügels dienen. Die Lagerbuchsen 16a und 16b haben einen Abstand l2 voneinander. Der Abstand l2 ist kleiner als der Abstand l1.

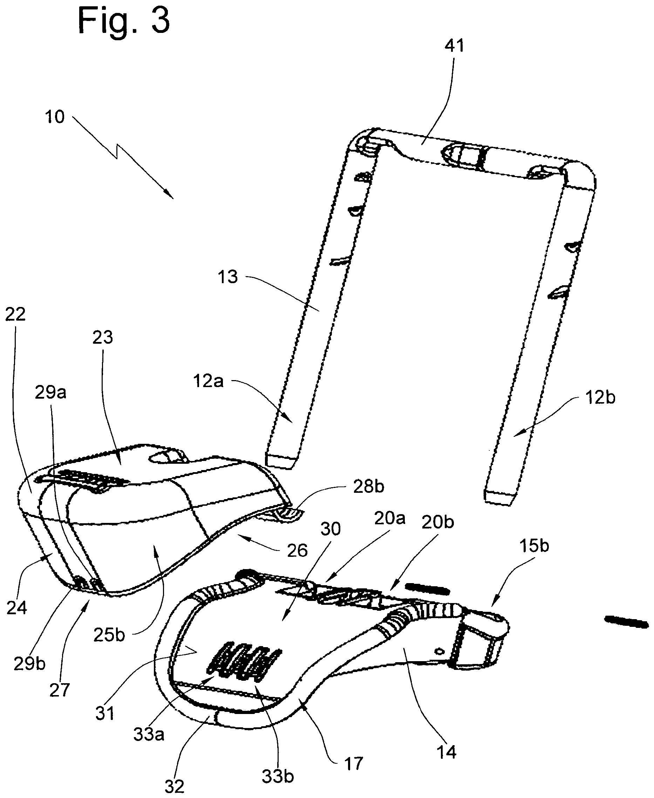

Das Basiselement 14 ist im vorliegenden Ausführungsbeispiel zur Ausbildung einer so genannten L-Shape Kopfstütze geformt. Ein vorderer Bereich 17 des Basiselements 14 ist schnabelförmig ausgebildet. Der Bereich 17 ist an der Unterseite mit Versteifungsrippen 18 versehen. Dritte Lagerbuchsen 19a und 19b dienen der Montage eines Stützbügels, der in Fig. 2 nicht dargestellt ist. Der Stützbügel hat die Aufgabe, die Form der Kopfstütze an die gewünschten Maße anzupassen. An Öffnungen 20a und 20b grenzen Widerlagerflächen 21a und 21b an, die der Halterung eines in Fig. 3 dargestellten Hohlkörpers dienen. Das Basiselement 14 ist als Kunststoffspritzgießteil ausgebildet.

In Fig. 3 ist eine Explosionsdarstellung der Kopfstütze 10 gezeigt. Das Kopfpolster ist der Übersichtlichkeit halber nicht dargestellt. Die Kopfstütze 10 umfasst den Tragstangenbügel 13, das Basiselement 14 sowie einen an dem Basiselement 14 befestigbaren Hohlkörper 22. Der Hohlkörper 22 ist schalenförmig und als Kunststoffspritzgießteil ausgebildet und umfasst eine Deckwand 23, eine Stirnwand 24 sowie Seitenwände 25a und 25b. In Fig. 3 ist lediglich die Seitenwand 25b dargestellt. Eine Öffnung 26 des Hohlkörpers 22 ist von einer Laibung 27 begrenzt.

Das Basiselement 14 weist an einer Oberseite 30 eine Außenfläche 31 auf, die von einem in diesem Ausführungsbeispiel als Wulst ausgebildeten Rand 32 begrenzt ist. Die Außenfläche 31 ist z.B., insbesondere angrenzend an den Rand 32, glatt ausgebildet. Die Laibung 27 ist komplementär zu einer Außenfläche 31 des Basiselements 14 ausgebildet. An der Stirnwand 24 sind Befestigungsstrukturen 29a und 29b angeformt. In die Außenfläche 31 sind Basiselementfeste Haltemittel 33a und 33b integriert, die mit den Befestigungsstrukturen 29a und 29b in Eingriff bringbar sind.

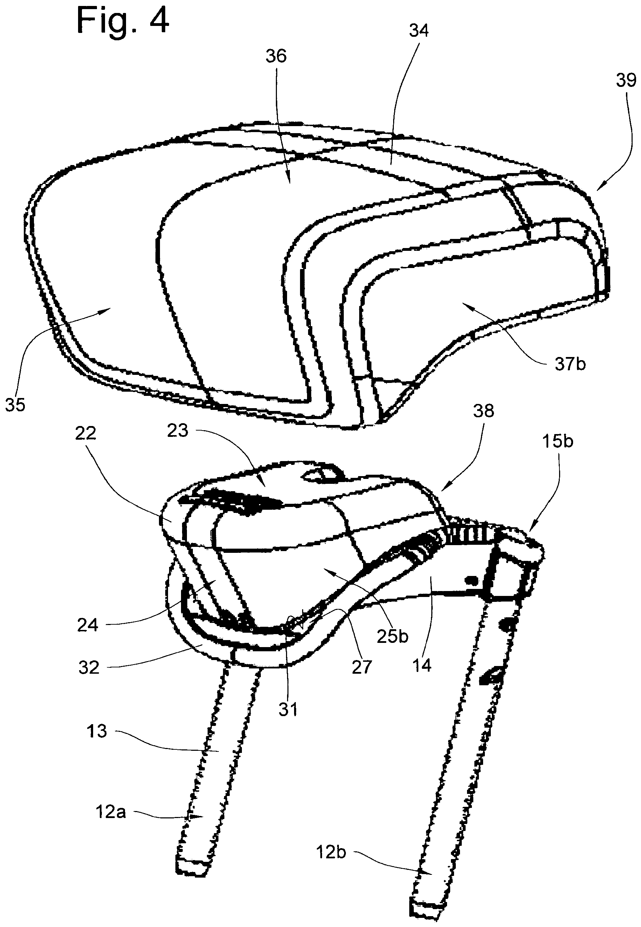

In Fig. 4 ist erkennbar, dass der Tragstangenbügel 13 an dem Basiselement 14 montiert ist. Die Tragstangenenden 12a und 12b durchgreifen die ersten Lagerbuchsen 15a und 15b. Der Tragstangenbügel 13 weist in bekannter weise Rastkerben auf, die mit Rastmitteln der Rückenlehne zusammenwirken und eine Höhenverstellung des Basiselements 14 relativ zu dem Tragstangenbügel 13 ermöglichen.

Der Hohlkörper 22 wird an dem Basiselement 14 montiert, indem die Befestigungsarme 28 in die Öffnungen 20a und 20b eingeführt werden, bis freie Endbereiche der Befestigungsarme 28 die Widerlagerflächen 21a und 21b hintergreifen. Danach werden die Haltemittel 33a und 33b mit den Befestigungsstrukturen 29a und 29b in Eingriff gebracht. Gemäß Fig. 4 ist der Hohlkörper 22 an dem Basiselement 14 montiert. Die Laibung 27 ist komplementär zu der Außenfläche 31 geformt und liegt bündig an der Außenfläche 31 an.

Anschließend kann das Kopfpolster 34 an dem Hohlkörper 22 und dem Basiselement 14 montiert werden. In dem dargestellten Ausführungsbeispiel ist das Kopfpolster 34 vor der Montage durch separate Herstellung eines Formschaumteils gefertigt worden.

Alternativ könnte das Kopfpolster hergestellt werden, indem die Montageeinheit aus Tragstangenbügel, Basiselement 14 und Hohlkörper 22 relativ zu einer Form befestigt wird. Ein Bezug wird in die Form eingelegt und anschließend wird Schaum in den Bezug eingespritzt, so dass sich der Bezug an die Wand der Form anlegt und das Basiselement mit dem daran montierten Hohlkörper mit Schaum umspritzt sind. Nach der Montage des Kopfpolsters liegt ein Stirnbereich 35 an der Stirnwand 24 und ein Deckbereich 36 an der Deckwand 23 des Hohlkörpers 22 an. Seitenbereiche 37a und 37b liegen an den Seitenwänden 25a und 25b an. An einer Rückwand 38 des Hohlkörpers 22 liegt ein hinterer Bereich 39 des Kopfpolsters 34 an.

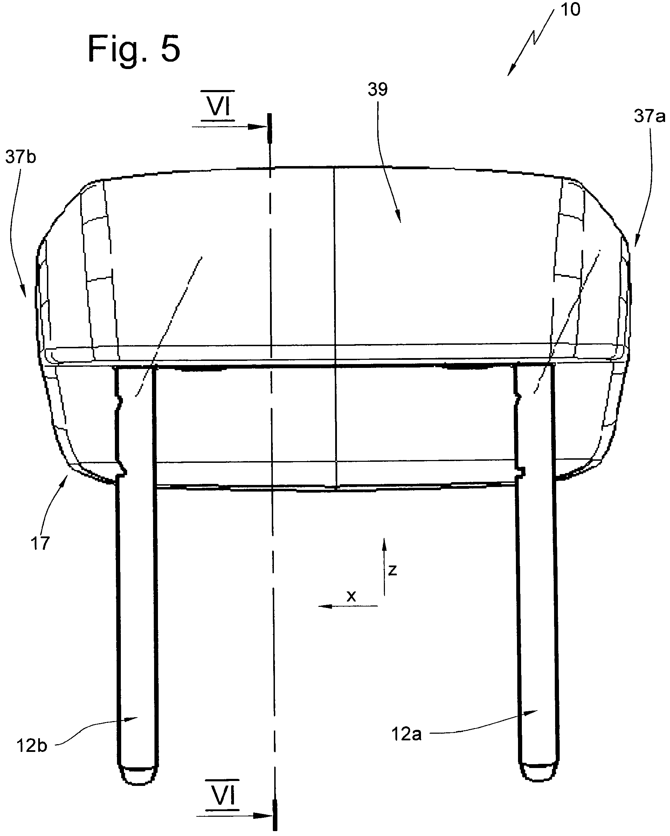

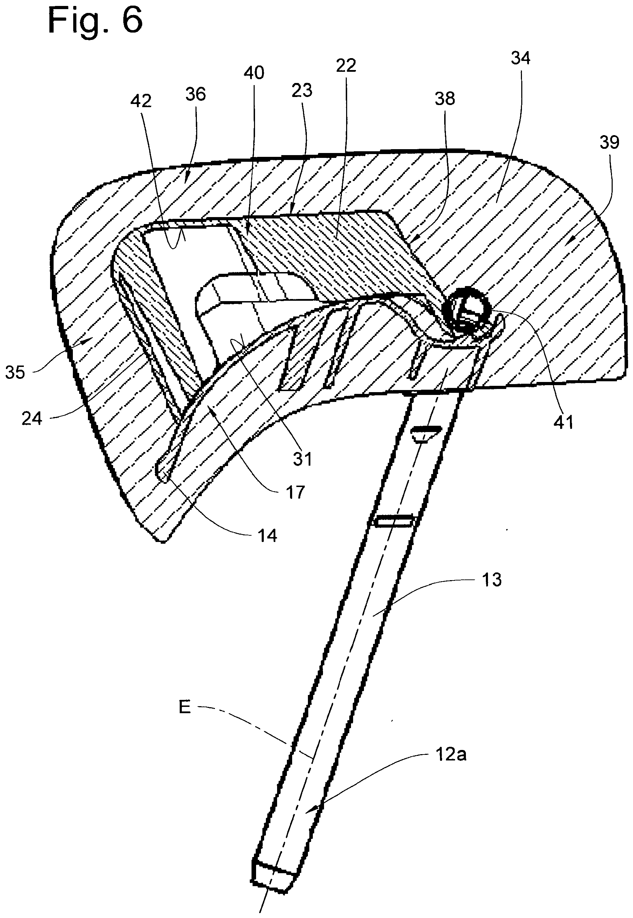

Eine rückwärtige Ansicht der Kopfstütze 10 ist in Fig. 5 gezeigt. In Fig. 5 ist erkennbar, dass der vordere Bereich 17 sich L-förmig nach unten erstreckt. Gemäß Fig. 6 bildet der vordere Bereich 17 einen spitzen Winkel zu einer von den Tragstangenenden 12a und 12b aufgespannten Ebene E. Zwischen einer Innenfläche 42 des Hohlkörpers 22 und der Außenfläche 31 des Basiselements 14 wird ein Hohlraum 40 gebildet, der im vorliegenden Fall mit Luft gefüllt ist.

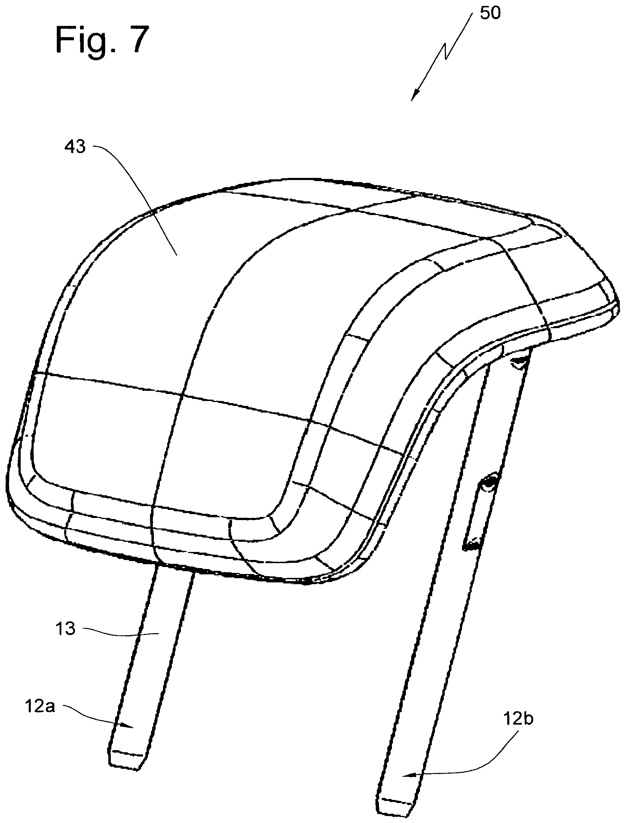

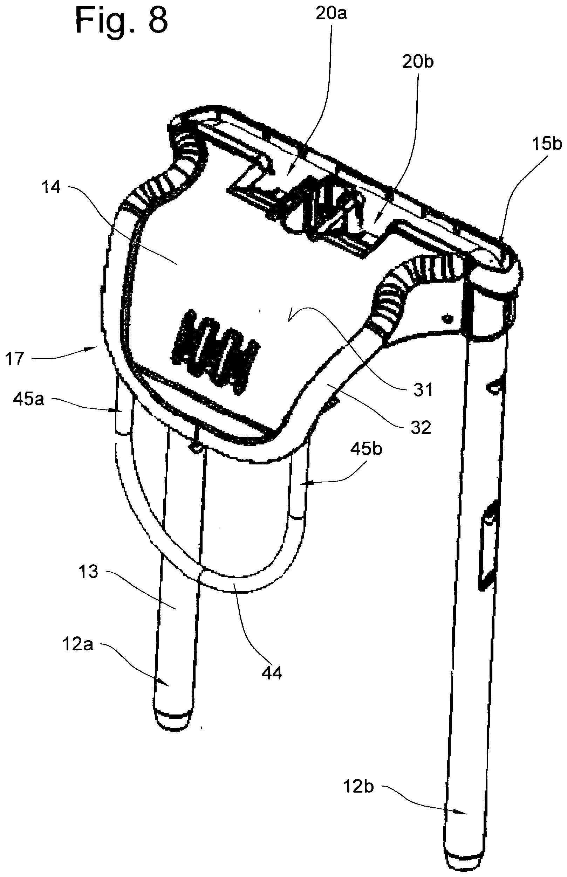

Eine zweite Ausführungsform der Kopfstütze ist in den Fig. 7 und 8 dargestellt und insgesamt mit dem Bezugszeichen 50 bezeichnet. Die Kopfstütze ist mit einem Kopfpolster 43 versehen, das sich, verglichen mit dem Kopfpolster 34, in Bezug auf die Abmessungen und auf die Form unterscheidet. Die Kopfstütze 50 umfasst das Basiselement 14, den Tragstangenbügel 13 sowie einen Stützbügel 44 mit freien Enden 45a und 45b. Die Enden 45a und 45b sind in den Lagerbuchsen 19a und 19b befestigt. Der Stützbügel 44 bildet eine Verlängerung des vorderen Bereichs 17 und dient als Rahmen, welcher mit dem Kopfpolster 43 überspannt werden kann, wie in Fig. 7 dargestellt. Alternativ könnte auch bei dieser Kopfstütze 50 das Kopfpolster durch Umspritzen in einer Form gefertigt werden, wie in Bezug auf das erste Ausführungsbeispiel beschrieben. Bei der Kopfstütze gemäß der Fig. 7 und 8 ist kein Hohlkörper 22 an dem Basiselement 14 montiert. Gemäß einer alternativen, nicht dargestellten Ausführungsform könnte auch die in den Fig. 7 und 8 dargestellte Kopfstütze 50 erfindungsgemäß mit einem Hohlkörper 22 versehen sein.

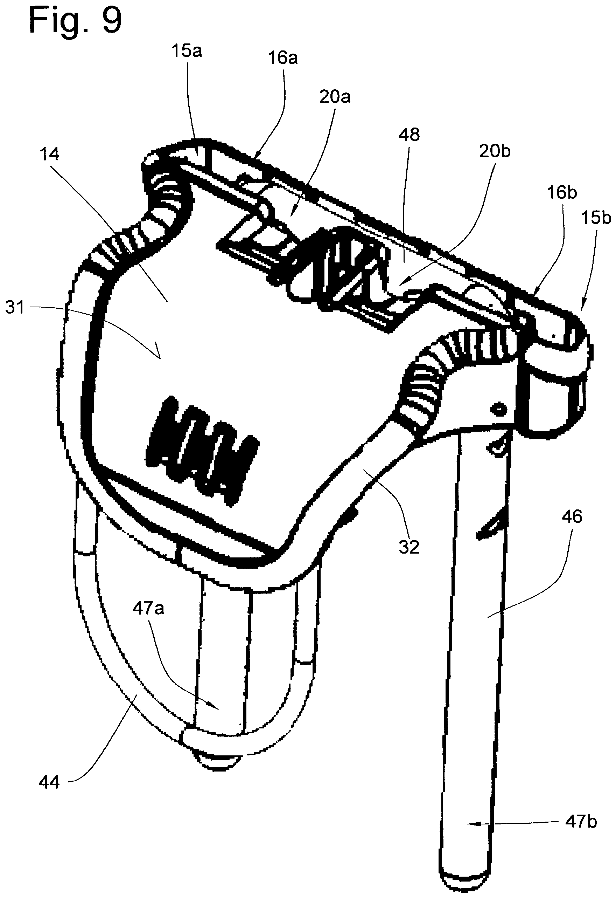

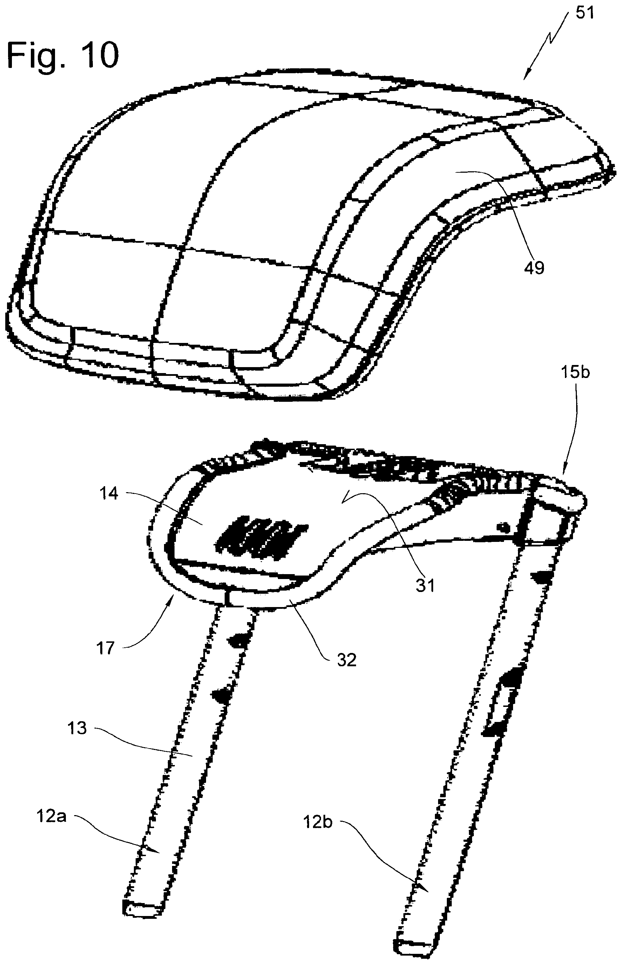

Das in Fig. 9 dargestellte Ausführungsbeispiel unterscheidet sich von dem in den Fig. 7 und 8 dargestellten Ausführungsbeispiel lediglich dadurch, dass ein Tragstangenbügel 46 an dem Basiselement 14 montiert ist, wobei Tragstangenenden 47a und 47b des Tragstangenbügels 46 die zweiten Lagerbuchsen 16a und 16b durchgreifen. Ein Steg 48 des Tragstangenbügels 46 ist kürzer ausgebildet als der Steg 41 des Tragstangenbügels 13. Der Tragstangenbügel 46 kann alternativ zu dem Tragstangenbügel 13 auch bei dem in den Fig. 1 bis 6 und einem folgenden, in Fig. 10 dargestellten Ausführungsbeispiel verwendet werden.

Bei dem in Fig. 10 dargestellten Ausführungsbeispiel ist die Kopfstütze mit dem Bezugszeichen 51 bezeichnet. Die Kopfstütze 51 umfasst den Tragstangenbügel 13, das Basiselement 14 und ein Kopfpolster 49. Der Tragstangenbügel 13 ist wie bereits oben beschrieben in den Lagerbuchsen 15a und 15b montiert. Das als Formschaumteil ausgebildete Kopfpolster 49 wird an dem Basiselement 14 montiert.

Alternativ ist es ebenfalls möglich, das Kopfpolster 49 erfindungsgemäß herzustellen, indem das Basiselement 14 relativ zu einer Form angeordnet wird, anschließend ein Bezug in die Form eingelegt und Schaum in die Form eingespritzt wird, wobei sich der Bezug an die Formwand anlegt und die Montageeinheit aus Basiselement 14 und Hohlkörper 22 umschäumt werden.

Es wird abschließend noch einmal darauf hingewiesen, dass in allen Ausführungsbeispielen dasselbe Basiselement 14 verwendet wird. An dem Basiselement 14 können unterschiedliche Tragstangenbügel, unterschiedliche Hohlkörper, unterschiedliche Kopfpolster sowie unterschiedlich geformte Stützbügel an den am Basiselement vorhandenen Befestigungsmitteln montiert werden. Darüber hinaus ist es möglich, Kopfstützen mit dem Basiselement 14 herzustellen, bei welchen ein Stützbügel und / oder ein Hohlkörper nicht vorhanden ist.

Jeder Hohlkörper aus einer Gruppe von mit der Anlagefläche 31 des Basiselements 14 kombinierbaren Hohlkörpern umfasst z.B. eine zu der Form der Anlagefläche 31 des Basiselements 14 komplementäre Laibung 27 oder eine komplementär zu der Anlagefläche 31 ausgebildete Gegenfläche. Darüber hinaus weist jeder Hohlkörper Befestigungsmittel auf, die mit Gegenbefestigungsmitteln des Basiselements 14 korrespondieren.

## Patentansprüche

1. Kopfstütze für Fahrzeugsitze, mit einem Basiselement (14), welches auf wenigstens einer Tragstange (13, 46) an einem Fahrzeugsitz lagerbar ist, wobei an dem Basiselement (14) ein Kopfpolster (34) befestigt ist, wobei das Basiselement erste Befestigungsmittel (21a, 21b, 33a, 33b) aufweist, an denen Gegenbefestigungsmittel (28, 29a, 29b) eines als Formteil ausgebildeten Hohlkörpers (22) lösbar befestigbar sind, und Anlageflächen (31) aufweist, die derart ausgebildet sind, dass sie mit Gegenanlageflächen (27) des Hohlkörpers zur Anlage bringbar sind, **dadurch gekennzeichnet, dass** Gegenanlageflächen in Form einer eine zu dem Basiselement (14) weisende Öffnung (26) eines schalenförmigen Hohlkörpers umgebenden Laibung (27) oder Gegenanlageflächen eines im Wesentlichen geschlossenen schalenförmigen Hohlkörpers wenigstens teilweise komplementär ausgebildet sind zu einer Anlagefläche in Form einer Außenfläche (31) des Basiselements, wobei der Hohlkörper (22) an dem Basiselement befestigt ist und die Montageeinheit aus Basiselement und Hohlkörper mit dem Kopfpolster versehen ist.

2. Koptstütze nach Anspruch 1, **dadurch gekennzeichnet, dass** zwischen dem Hohlkörper (22) und der Laibung (27) ein Dichtmittel eingefügt ist.

3. Kopfstütze nach einem der vorangehenden Ansprüche, **dadurch gekennzeichnet, dass** das Basiselement (14) zweite Befestigungsmittel (19a, 19b) aufweist, an denen zweite Gegenbefestigungsmittel (45a, 45b) eines Bügels (44) lösbar befestigbar sind.

## Claims

1. Head support for vehicle seats, with a base element (14) mountable on at least one support bar (13, 46) on a vehicle seat, wherein a headrest (34) is fastened to the base element (14), wherein the base element has first fastening means (21a, 21b, 33a, 33b), to which counter-fastening means (28, 29a, 29b) of a hollow body (22) formed as a shaped part are detachably fastenable, and has contact surfaces (31) which are formed such that they can be brought into contact with counter-contact surfaces (27) of the hollow body, **characterised in that** counter-contact surfaces in the form of an inner face (27) surrounding an opening (26) of a shell-shaped hollow body facing the base element (14) or counter-contact surfaces of a substantially closed shell-shaped hollow body are formed at least partially complementary to a contact surface in the form of an outer surface (31) of the base element, wherein the hollow body (22) is fastened to the base element and the assembly unit consisting of the base element and hollow body is provided with the headrest.

2. Head support according to claim 1, **characterised in that** a sealant is inserted between the hollow body (22) and the inner face (27).

3. Head support according to one of the previous claims, **characterised in that** the base element (14) has second fastening means (19a, 19b) to which second counter-fastening means (45a, 45b) of a bracket (44) are detachably fastenable.

## Revendications

1. Appuie-tête destiné à un siège de véhicule, avec un élément de base (14) qui peut être posé sur au moins une barre de support (13, 46) sur un siège de véhicule, un repose-tête (34) étant fixé sur l'élément de base (14), l'élément de base présentant des premiers moyens de fixation (21a, 21b, 33a, 33b) sur lesquels des moyens de contre-fixation (28, 29a, 29b) d'un corps creux (22) réalisé sous la forme d'une pièce moulée peuvent être fixés de manière amovible, et présentant des surfaces de contact (31) qui sont formées de sorte qu'elles peuvent être mises en contact avec des surfaces de contact antagonistes (27) du corps creux, **caractérisé en ce que** des surfaces de contact antagonistes sont configurées sous la forme d'un intrados (27) entourant une ouverture (26) d'un corps creux en forme de coquille orientée vers l'élément de base (14) ou que des surfaces de contact antagonistes d'un corps creux en forme de coquille sensiblement clos sont configurées de manière au moins partiellement complémentaire d'une surface de contact en forme de surface extérieure (31) de l'élément de base, le corps creux (22) étant fixé à l'élément de base et l'unité de montage constituée de l'élément de base et du corps creux étant dotée du repose-tête (34).

2. Appuie-tête selon la revendication 1, **caractérisé en ce qu'**entre le corps creux (22) et l'intrados (27) est inséré un moyen d'étanchéité.

3. Appuie-tête selon une des revendications précédentes, **caractérisé en ce que** l'élément de base (14) présente des deuxièmes moyens de fixation (19a, 19b) sur lesquels des deuxièmes moyens de fixation antagonistes (45a, 45b) d'un étrier (44) peuvent être fixés de manière amovible.
